# EUROPEAN PATENT SPECIFICATION

(11) **EP 1 389 424 B1**
(45) Date of publication and mention of the grant of the patent: **15.02.2006**
(21) Application number: 03077432.7
(22) Date of filing: 04.08.2003
(51) Int. Cl.: A01N 43/70, A01N 43/80, A01N 47/18, A01N 59/02, A01N 59/26, A01N 25/04

(54) **Aqueous dispersion with fungicidal and algicidal action**
Wässerige Dispersionen mit fungizide und algizide Wirkung
Dispersions aqueuses à action fongicide et algicide

(30) Priority: 14.08.2002 DE 10237264
(43) Date of publication of application: 18.02.2004
(73) Proprietor: Air Liquide Santé (International), 75341 Paris Cedex 07 (FR); SCHÜLKE & MAYR GMBH, 22851 Norderstedt (DE)
(72) Inventor: Beilfuss, Wolfgang, 22339 Hamburg (DE); Mangold, Herbert, 20251 Hamburg (DE); Weber, Klaus, 20149 Hamburg (DE); Gradtke, Ralf, 25436 Tornesch (DE); Kassens, Elke, 23845 Grabau (DE)
(74) Representative: Conan, Philippe Claude

(56) References cited:
- WO-A-01/49119
- WO-A-01/74953
- WO-A-98/33380
- WO-A-99/53760
- US-A- 4 500 517

## Description

The invention relates to a stable preservative with algicidal and fungicidal action in the form of a dispersion and to the use of the preservative in or on technical products for internal and external application.

Film preservatives protect compositions, such as finishes, paints, plaster, varnishes, fillers and sealants, from microbial attack and decomposition. Biocidally finished surface coatings are applied internally and externally. The microbiocides used should be effective against fungi (e.g. Aspergillus niger, Penicillium funiculosum), including Alternaria species, and algae. In practice, it has proved to be advantageous to use active ingredient mixtures which cover a broad spectrum of activity. When applied externally, the microbiocidal active ingredients must furthermore be sufficiently resistant to being.

Film preservatives are preferably used as aqueous dispersions. Preparations based on solvents are increasingly losing importance because of the content of volatile organic compounds. On the other hand, film preservatives should be stable, homogeneous and readily able to be incorporated in coating compositions, should be sufficiently good value and should result as little as possible in discolorations of the treated surface coatings.

DE-A1-33 07 733 discloses salts of thiosulphuric acid esters, processes for their preparation and biocidal compositions comprising these salts. The salts of thiosulphuric acid esters, which are also described as Bunte salts, can be prepared by reaction of isothiazol-3-ones with hydrogen sulphite or sulphite salts with ring opening. However, the salts of thiosulphuric acid esters are not sufficiently microbiocidal when used alone.

DE-A1-41 22 962 discloses preparations for preventing biogenic destruction of building materials as a result of H₂SO₄ corrosion. For these purposes, combinations of specific quaternary ammonium salts with thiosulphuric acid derivatives are proposed. In this specific application, what matters in particular is the microbiocidal effectiveness against Thiobacillus species, which are held responsible for the biogenic H₂SO₄ destruction of building materials.

WO 00/11949 discloses the impregnation of a particulate support with a biocidal formulation. The particulate support is characterized by particular properties, such as BET surface and pore volume. A large number of compounds, such as triazines and carbamates, such as N'-(3,4-dichlorphenyl)-N,N-dimethylurea or methyl benzimadazol-2-ylcarbamate (carbendazim), are mentioned as biocidal active ingredients with which the support can be impregnated. In the examples of WO 00/11949, exclusively isothiazolin-3-ones are used as biocidal active ingredients. The particulate support impregnated with the biocidal formulation releases the biocide into a medium with a liquid base, such as a surface coating or a surface cleaner composition, in a controlled way, in order to combat the growth of bacteria, fungi or algae for a relatively long period of time. Stabilization of biocidal active ingredients is not disclosed in WO 00/11949.

The still unpublished German patent application of the Applicant Company with the reference 101 44 187 discloses preservatives for coating compositions which include at least one quaternary ammonium compound and at least one basifying agent. In such preservatives, the biocidal quaternary ammonium salt is stabilized and can, apart from this, comprise additional biocides, such as isothiazolones or triazine derivatives.

DE-A1-42 42 389 discloses aqueous dispersions with a fungicidal and algistatic action which include a mixture of the active ingredients a) carbendazim, b) 2-(thiocyanomethylthio)benzothiazole and c) 2-methylthio-4-(t-butylamino)-6-cyclopropylamino-s-triazine (Irgarol 1051). Thiabendazole, mercaptobenzothiazole or N-octylisothiazolone can be included as additional active ingredient.

DE-A1-197 05 085 discloses an algicidal and fungicidal preservative with Alternaria effectiveness which includes a) at least one particular pyrithione and b) at least one particular triazine and/or c) at least one particular benzimidazole or thiophene. In addition, additional active ingredients, such as thiabendazole, N-octylisothiazolone or isothiazolone Bunte salts, e.g. of N-octylisothiazolone and benzisothiazolone, may be present.

WO 00/59305 discloses microbiocidal compositions which comprise a) 2-methoxycarbonylaminobenzimidazole or thiabendazole, b) octylisothiazolin-3-one or 3-iodopropynyl N-butylcarbamate, c) zinc pyrithione and d) a urea derivative or a chlorine-free triazine derivative, such as terbutryn.

DE-A1-44 33 856 discloses antifouling mixtures of 2-mercaptopyridine N-oxide and/or its metal complexes and algicidal ureas. The mixtures can comprise additional antifouling agents, such as 2-methylthio-4-(tert-butylamino)-6-cyclopropylamino-s-triazine or 4,5-dichloro-2-(N-octyl)-3(2H)-isothiazolinone.

DE-A1 42 42 082 discloses hydrolysable polymeric resins which can comprise, as cobiocides, 2-methylthio-4-(tert-butylamino)-6-cyclopropylamino-s-triazine or 4,5-dichloro-2-(N-octyl)-4-isothiazolin-3-one.

GB-A-2 274 779 discloses a microbiocidal formulation which consists essentially of 0.01 to 5 weight% of a mixture of a sulphur-comprising aromatic compound and a triazine compound, dissolved in a solvent. The sulphur-comprising aromatic compound can be an isothiazolone. The only triazine compound disclosed in GB-A-2 274 779 is sym-triazinetriethanol.

DE-A1-41 38 090 discloses the use of triazine-tris(alkylaminocarboxylic acid) derivatives as biocidal agents in aqueous systems, and coolants comprising these agents.

Aqueous dispersions based on combinations of the active ingredients diuron (3,4-dichlorophenylurea, algicidally effective, comparatively good value, resistant to being leached out) and carbendazim (methyl benzimidazol-2-yl-carbamate, fungicidally effective against Aspergillus niger and Penicillium funiculosum, not sufficiently effective against Alternaria species, resistant to being leached out) and optionally Kathon 893 (active ingredient: N-octylisothiazolone, effective against fungi, including Alternaria species, limited resistance to being leached out) are state of the art in the area of film preservatives.

In order to achieve a broad effectiveness against algae and fungi in film preservatives, combination preparations are preferably used. The requirements for resistance to being leached out and effectiveness against specific microorganisms, such as, e.g., Alternaria (a type of fungi which is acquiring increasing importance and in particular occurs in warmer regions), also necessitate the use of combination preparations. Isothiazolones, preferably N-octylisothiazolone, available in the form of a 45% solution in 1,2-propylene glycol as Kathon 893, are also used in film preservatives in order to provide complete effectiveness against Alternaria species.

Thus, the product Parmetol DF 19 Forte comprises a combination of the active ingredients diuron and carbendazim in aqueous dispersion. The product Acticide EP Paste comprises a combination of the active ingredients carbendazim, diuron and Kathon 893. However, because of the aromatically bonded chlorine and because of the lack of compatibility with the environment, diuron is undesirable for ecotoxicological reasons. In addition, carbendazim will be classified as poisonous and, in particular in high application concentrations, will lose importance.

Products with the active ingredient combination N²-(tert-butyl)-N⁴-ethyl-6-methylthio-1,3,5-triazine-2,4-diamine (terbutryn) + Kathon 893 are also known, though they comprise high proportions of solvent or emulsifier, which conflicts with the market demand for products which are low in or devoid of solvents (VOC). Thus, the products Acticide TL 27/1, Acticide TL 722 and Cinon TC comprise (i) terbutryn, (ii) carbendazim and (iii) N-octylisothiazolone. The stability of these products is not satisfactory, however. Thus, investigations by the Applicant Company have shown that aqueous dispersions comprising Kathon 893 and terbutryn are not sufficiently stable on storage. Thus, although the combination of terbutryn and Kathon 893 (or of the solvent-free variant Kathon 893 T) can first be converted to a homogeneous, almost white, aqueous dispersion, such an aqueous dispersion does not give a satisfactory stability. Changes in consistency occur after a time lag (i.e. after approximately 6 months at room temperature), with formation of a nonhomogeneous gritty dispersion (see Examples). However, a nonhomogeneous dispersion tends to result in the formation of sediment and in uneven distribution of the active ingredients in the container. The use of such a product in paints, plaster and other coatings is forbidden, since the consistency of the final product is harmed and the danger exists of metering errors.

It is therefore generally the object of the present invention to make available preservatives for use in technical products for internal and external application. These preservatives should
1) be able to be formulated in an aqueous base, i.e. without the compulsory use of relatively large amounts of solvents or emulsifiers,
2) exhibit a stability on storage at 25°C of at least 1 year,
3) be compatible with a large number of (additional) biocides which are currently used,
4) be sufficiently effective algicidally and fungicidally (exhibit a broad spectrum of activity),
5) be able to be formulated in a cost-effective way,
6) be halogen-free,
7) exhibit good colour stability (as it does not include, for example, iodopropynyl butylcarbamate),
8) not tend to discolour in contact with other substances (as is the case, for example, with zinc pyrithione, which tends to discolour in the presence of iron ions),
9) be low in toxicity (i.e. not have to comprise carbendazim),
10) be compatible with the environment (i.e. not have to comprise diuron or other organochlorine compounds),
11) not exhibit an unpleasant odour (as is the case, for example, with thiocyanomethylthiobenzothiazole),
12) be highly resistant to leaching, and
13) have good pH stability and good temperature stability.

It is therefore a specific object of the invention to make available stable aqueous dispersions based on triazine and isothiazolone for the finishing of coatings for internal and external application. The invention was targeted in particular at improving the compatibility of isothiazolones with triazines and simultaneously at increasing the resistance to being leached out of isothiazolones.

It has now been found, surprisingly, that these and other objects are achieved by a preservative with algicidal and fungicidal action in the form of a dispersion which includes
a) at least one algicidal triazine,
b) at least one fungicidal isothiazolone and
c) at least one dispersion stabilizer chosen from the group consisting of
   c1) sulphite salt, hydrogen sulphite salt, compound which releases sulphite and compound which releases hydrogen sulphite, and
   c2) hypophosphite salt and compound which releases hypophosphite salt.

In particular, it has been found, surprisingly, that aqueous dispersions comprising a triazine and an isothiazolone can be stabilized by the mentioned component c) in a dispersion. The improvement in the stability is expressed, inter alia, in that the preservatives remain homogeneous for longer than would be the case without the addition of the dispersion stabilizers mentioned.

In one embodiment, the preservative according to the invention comprises, in addition, d) at least one imidazole derivative, in particular methyl benzimidazol-2-ylcarbamate (carbendazim).

Examples of triazine compounds are N²,N⁴-diisopropyl-6-methylthio-1,3,5-triazine-2,4-diamine (prometryn), N²-(tert-butyl)-N⁴-ethyl-6-methylthio-1,3,5-triazine-2,4-diamine (terbutryn) and N²-(tert-butyl)-N⁴⁻cyclopropyl-6-methylthio-1,3,5-triazine-2,4-diamine (Irgarol 1051, Mctt).

Preferred isothiazolones are isothiazolin-3-ones chosen from N-octylisothiazolone, N-methylisothiazolone, 5-chloro-N-methylisothiazolone, 4,5-dichloro-N-octylisothiazolone, benzisothiazolone and N-butylbenzisothiazolone.

Examples of dispersion stabilizers from the group c1) are sulphur dioxide, aqueous sulphur dioxide solution (sulphurous acid), alkali metal sulphites, such as sodium disulphite, potassium disulphite or sodium hydrogen sulphite solution, ammonium salts, such as ammonium sulphite, bis(bis(2-hydroxyethyl)ammonium) sulphite, bis(triethylammonium) sulphite or bis((2-hydroxyethyl)ammonium) sulphite, alkaline earth metal sulphites, such as calcium hydrogen sulphite, compounds which cleave off sulphite, such as glyoxal bis(sodium hydrogen sulphite) adduct or glutaraldehyde bis(sodium hydrogen sulphite) adduct, lignosulphonic acids and sulphite waste liquors.

Examples of dispersion stabilizers from the group c2) are alkali metal hypophosphites, such as potassium hypophosphite or sodium hypophosphite, ammonium hypophosphite, alkaline earth metal hypophosphites, such as magnesium hypophosphite or calcium hypophosphite, zinc hypophosphite and compounds which cleave off hypophosphite, such as thiabendazole hypophosphite.

In a preferred embodiment, the molar ratio of b) isothiazolone to c) dispersion stabilizer in the preservative according to the invention is 1:10 to 10:1, preferably 1:2 to 1:1, particularly 1:1.5 to 1.5:1, such as 1:1.1 to 1.1:1 or approximately 1:1.

In one embodiment, the total content of a), b), c) and optionally d) is to 1 to 99 weight%, preferably 5 to 60 weight%, in particular 10 to 30 weight%, with reference to the weight of the preservative.

The amount of a) triazine can amount to 1 to 12 weight%, preferably 3 to 9 weight%, more preferably 4 to 7 weight%, with reference to the weight of preservative. The amount of b) isothiazolone can amount to 1 to 8 weight%, preferably 2 to 6 weight%, more preferably 3 to 5 weight%, with reference to the weight of the preservative. The amount of c) dispersion stabilizer can amount to 0.5 to 5 weight%, preferably 1 to 3 weight%, more preferably 1.5 to 2.5 weight%, with reference to the weight of the preservative. The amount of d) benzimidazole derivative can, if it is present, amount to 2 to 13 weight%, preferably 4 to 11 weight%, more preferably 6 to 9 weight%.

In addition to the necessary components a), b), c) and optionally d) described above, one or more functional additives can be added to the preservatives according to the invention. Suitable additives are, for example:
- inorganic or organic compounds which release cyanide ions, such as potassium cyanide, thiocyanomethylthiobenzothiazole (TCMTB) and methylenebisthiocyanate,
- inorganic or organic compounds with a high adsorbing capacity or binding capacity for liquid or low-melting-point active ingredients or with the capability of forming inclusion complexes with these active ingredients, e.g. highly dispersed silica, polysaccharides, such as starch or cyclodextrin, modified cyclodextrins, metal oxides, such as zinc oxide, or glycoluril,
- substances which improve the effectiveness and/or resistance to being leached out, such as alkali metal or alkaline earth metal salts or cation-active compounds, e.g. quaternary ammonium compounds, such as benzalkonium salts, Bardac 22 salts, polymeric quats, biguanides, amines or their salts, or other cationic compounds,
- conventional active ingredients of container preservatives, such as formaldehyde or formaldehyde-depositing compounds, active oxygen compounds, such as butyl hydroperoxide, alcohols, such as phenoxyethanol, phenoxypropanol or benzyl alcohol, or phenols, such as o-phenylphenol or triclosan,
- halogenated organic compounds, such as iodopropynyl butylcarbamate (IPBC), 1,2-dibromo-2,4-dicyanobutane (DBDCB) and bronopol,
- triazole derivatives, urea derivatives, such as diuron or isoproturon, dithiocarbamates, such as ziram or thiram, hydroxylamine derivatives, such as N-cyclohexyl-N-nitrosohydroxylamine potassium or aluminium salt, benzothiophene-2-cyclohexylcarboxamide S,S-dioxide, tetrachloroisophthalonitrile, benzalkonium silicate, benzalkonium thiocyanate, Vantocil IB, O-formals, such as ethylene glycol bishemiformal, propylene glycol bishemiformal, benzyl alcohol hemiformal, butyl glycol hemiformal or butyl diglycol hemiformal, or N-formals,
- dispersing agents, emulsifiers, antifoaming agents, such as silicones, silica gel, fatty acid esters, dyes, herbicides, insecticides, complexing agents, corrosion inhibitors, such as benzotriazole, solubility promoters, wetting agents, such as fatty alcohol ethoxylates, alkylpolyglycosides, pigments, buffers, pH regulators, such as alkanolamines, e.g. 2-amino-2-methyl-1-propanol (AMP), phosphates, polyphosphates, surfactants, such as anionic surfactants, nonionic surfactants, amphoteric surfactants or cationic surfactants, viscosity regulators, thickeners, such as hydroxyethylcellulose, inorganic or organic binders, fillers, adhesives, surface modifiers, such as slip additives or matting agents, flow-control agents, film-forming agents, dehydrating agents, antiskinning agents, screening agents or flame retardants,
- heterocycles, such as pyrithione salts (e.g. sodium pyrithione) or pyrithione complexes (e.g. zinc pyrithione), thiabendazole, thiabendazole salts and guanidinium compounds, such as dodecylguanidinium acetate.

Advantageous additives are nonionic surfactants, antifoaming agents, zinc oxide, container preservatives, thickeners, starch, zinc pyrithione, benzalkonium salts, such as benzalkonium silicate and benzalkonium thiocyanate, Bardac 22 salts, Vantocil IB salts, thiabendazole, dodecylguanidinium acetate, iodopropynyl butylcarbamate, diuron, benzothiophene-2-cyclohexylcarboxamide and emulsifiers. In a particularly preferred embodiment, the preservative comprises, as additives, 0 to 2 weight% of nonionic surfactant, 0 to 0.2 weight% of antifoaming agent, 0 to 20 weight% of zinc oxide (e.g. as colour stabilizer for zinc pyrithione likewise present), 0 to 0.2 weight% of container preservative and/or 0 to 1 weight% of thickener.

Preservatives according to the invention formulated as aqueous compositions are preferred. The preparations with little or even no solvent are particularly preferred. In one embodiment, the preservative comprises less than 10 weight% of solvent, preferably less than 7 weight% and in particular less than 5 weight%.

A particularly preferred preservative according to the invention essentially comprises
a) approximately 5.6 weight% of triazine, e.g. terbutryn,
b) approximately 4 weight% of isothiazolone, e.g. N-octylisothiazolone,
c) approximately 2 weight% of dispersion stabilizer, e.g. potassium disulphite, and
d) approximately 7.8 weight% of imidazole derivative, e.g. carbendazim,

and water as the remainder.

An additional particularly preferred embodiment of the preservative according to the invention corresponds to the preservative IV from the Examples section, is free from carbendazim and essentially comprises
a) approximately 6 weight% of triazine, e.g. terbutryn,
b) approximately 2 weight% of isothiazolone, e.g. N-octylisothiazolone,
c) approximately 1 weight% of dispersion stabilizer, e.g. potassium disulphite,
d) approximately 10 weight% of zinc oxide,
e) approximately 19 weight% of zinc pyrithione (approximately 40 weight% of a 48% dispersion) and
f) approximately 1 weight% of nonionic surfactant,

and water as the remainder.

The invention additionally relates to the use of one of the preservatives mentioned in an aqueous dispersion for use in or on technical products for internal or external application, in particular the use for the microbiocidal finishing of finishes, paints, plaster, varnishes, fillers, sealants, plastics, composites, wood, concrete, stone, paper, board, leather, textiles, glues and adhesives.

The preservative has particularly advantageous effects in technical products which
are present at a pH of 1 to 13, preferably 3 to 12, or
are present at a pH of 11 or higher, preferably higher than 12, in particular higher than 13.

0.1 to 5 weight% of the preservative can be used for this, preferably 0.5 to 3 weight%, in particular 1 to 2 weight%, with reference to the preserved technical product. When a (film) preservative according to the invention is used, a synergistic effect may be observed if, in addition, a container preservative is used.

In addition, the invention relates to the use of
i) sulphite salt, hydrogen sulphite salt, compound which releases sulphite or compound which releases hydrogen sulphite, or
ii) hypophosphite salt or compound which releases hypophosphite,

for the stabilizing of a composition which includes
a) at least one algicidal triazine and
b) at least one fungicidal isothiazolone.

The advantages of the invention are revealed in particular from the following examples. In these, the parts are by weight.

### Examples

### 1. Test procedures

### 1a) Determination of the resistance to algal attack

### Area of application

Laboratory method for determining the resistance of exterior masonry coatings to algal attack. The method uses exterior masonry coatings on standardized paper as test substance and Chlorella fusca as test alga. The experiments are carried out in Petri dishes on agar nutrient media.

### Preparation of the sample

50 g of the material to be finished are treated in separate batches with different concentrations of the algicide to be investigated and are homogenized with a basket stirrer for 3-5 min.

### Preparation of the test items

Paper substrate materials having the dimensions 90 × 270 mm (Schleicher & Schüll, No. 2589 B/X 24078) are coated with the test material. The paint or plaster samples are coated using a doctor blade with a wet-layer thickness of 250 µm. The blade must have an opening with a width of at least 6.5 cm. In the case of plaster, the layer thickness depends, as in practice, on the particle size. The coated substrate materials, referred to below as test specimens, are subsequently dried for 5 days in a horizontal position.

### Pretreatment of the test specimens

The possible removal in practical use of microbiocides under the effects of the weather should be simulated with the pretreatment of the test specimens.

The test specimens are rinsed for 72 hours under running tap water of 15 ± 5°C with a flow rate of 1 l/min and are subsequently dried for 2 days. The cross section of the receptacle for the rinsing is 1 000 ± 500 cm² in the direction of flow. Three test specimens with a diameter of 5 cm are punched out from the pretreated test specimens and are sterilized in a ⁶⁰Co source with at least 10 kGy.

### Experimental procedure

### Inoculation and incubation

The samples are placed under aseptic conditions on the algal nutrient media and are inoculated centrally with 5 ml of each algal suspension. The mixture of the algal suspensions is spread over the surface with a Drigalski spatula or an angle-forming sterile glass rod. During the growth phase at 22°C ± 2°C, the coated samples in the Petri dishes are exposed to light with a strength of approximately 1 000 lux (conventionally used fluorescent tubes, type D 67 daylight). A cycle of 12 hours exposure and 12 hours storage in darkness each time is applied in the course of this.

### Assessment

The algal colonization of the samples is examined and assessed after 2 weeks. The evaluation is carried out visually. The assessment of the samples is based on the following assessment scale:

### Group 1

- - =: no algal growth on the test specimens. Formation of an inhibitory zone or algal growth on the nutrient medium up to the edge of the test specimens. Paints of this group can be characterized by the description "effectively finished against algal colonization".

### Group 2

Visible algal colonization on the test specimen
- + =: little growth
- ++ =: moderate growth
- +++ =: strong growth

### 1b) Determination of the resistance to fungal attack

### Area of application

Laboratory method for determining the resistance of exterior masonry coatings to fungal attack. The method uses exterior masonry coatings on standardized paper as test substance and Aspergillus niger (AN, ATCC 6275), Alternaria alternata (AL) and Penicillium funiculosum (PF, ATCC 36839) as test fungi. The experiments are carried out in Petri dishes on dextrose nutrient media.

### Preparation of the sample

50 g of the material to be finished are treated in separate batches with different concentrations of the fungicide to be investigated and are homogenized with a basket stirrer for 3-5 min.

### Preparation of the test items

Paper substrate materials having the dimensions 90 × 270 mm (Schleicher & Schüll, No. 2589 B/X 24078) are coated with the test material. The paint or plaster samples are coated using a doctor blade with a wet-layer thickness of 250 µm. The blade must have an opening with a width of at least 6.5 cm. In the case of plaster, the layer thickness depends, as in practice, on the particle size. The coated substrate materials, referred to below as test specimens, are subsequently dried for 5 days in a horizontal position.

### Pretreatment of the test specimens

The possible removal in practical use of microbiocides under the effects of the weather should be simulated with the pretreatment of the test specimens.

The test specimens are rinsed for 72 hours under running tap water of 15 ± 5°C with a flow rate of 1 l/min and are subsequently dried for 2 days. The cross section of the receptacle for the rinsing is 1 000 ± 500 cm² in the direction of flow. Test specimens with a diameter of 5 cm are punched out from the pretreated test specimens and are sterilized in a ⁶⁰Co source with at least 10 kGy.

### Experimental procedure

### Inoculation and incubation

The Sabouraud dextrose agar, which has solidified in the Petri dish, is inoculated with 0.2 ml of spore suspension (10⁷ spores/ml) and plated out using a sterile Drigalski spatula or an angle-forming sterile glass rod. The pretreated test specimens are then evenly placed on the inoculated surface of the nutrient medium using a pair of tweezers. In doing so, care is taken that the test specimen is in contact with the surface of the nutrient medium over the entire surface of the test specimen. Incubation is subsequently carried out at 30°C ± 2°C for three weeks. For other test microorganisms, the incubation temperature must be adjusted in order to achieve optimum growth.

### Assessment

After one, two or three weeks, the test specimens are examined with regard to fungal growth. The evaluation is carried out visually or, if this is necessary in order to rule out crossinfections, using a magnifying glass. If crosscolonization is observed to an extent which significantly interferes with the evaluation, the experiment cannot be assessed and is to be repeated. The assessment of the samples is based on the following assessment scale:
- 00 =: entire plate free from colonization*
- 0 =: zone formation (no colonization around the sample)*
- (0) =: fungal colonization up to the sample*
- 1 =: only the sample edge is colonized*
- 2 =: the sample is colonized from the edge inwards (less than 25%)
- 3 =: the sample surface is colonized by individual colonies (25-75%)
- 4 =: the sample surface is extensively colonized (75% and more, but not the entire surface)
- 5 =: the sample surface is completely colonized (100%).

* Samples assessed as 00, 0, (0) and 1 can be described as "effectively finished against fungal growth".

### 2. Preparation of preservatives

### Method A

Preservatives were formulated each time from two subdivisions from the constituents given in the following table (Table 1).

**Table 1**

| **Subdivision** | **Constituent** | **I (Comparison) Parts** | **II Parts** |
|---|---|---|---|
| **1** | Purified water | 25.92 | 25.92 |
| | Nonionic surfactant | 0.50 | 0.50 |
| | Carbendazim | 8.00 | 8.00 |
| | 1,2-Benzisothiazolin-3-one | 0.03 | 0.03 |
| | Antifoaming agent | 0.05 | 0.05 |
| | Terbutryn | 5.50 | 5.50 |
| | | | |
| **2** | Purified water | 48.89 | 46.78 |
| | Potassium disulphite | | 2.11 |
| | Container preservative | 0.06 | 0.06 |
| | Thickener | 0.55 | 9.55 |
| | Emulsifier | 1.50 | 1.50 |
| | Kathon 893 | 9.00 | 9.00 |

To prepare subdivision 1, water was in each case introduced, nonionic surfactant, carbendazim, 1,2-benzisothiazolin-3-one, antifoaming agent and terbutryn were added thereto and the mixture was stirred for approximately 30 minutes using a magnetic stirrer. The mixture was then milled in a bead mill to a maximum particle size of 10 µm. To prepare subdivision 2, water was again added, container preservative, emulsifier and N-octylisothiazolone (Kathon 893 is a 45% solution of N-octylisothiazolone in 1,2-propylene glycol) and, in preservative II according to the invention, potassium disulphite were added thereto, then thickener was added with stirring and stirred in homogeneously, and the mixture was left stirring for approximately 1 h. The subdivisions were then mixed. Preservative I is not according to the invention; in preservative II according to the invention, the molar ratio of isothiazolone to potassium disulphite amounts to approximately 1:1.

### Method B

The following constituents were used to prepare preservative III according to the invention (Table 2):

**Table 2**

| **Subdivision** | **Constituent** | **III Parts** |
|---|---|---|
| **1** | Purified water | 34.81 |
| | Nonionic surfactant | 0.50 |
| | Carbendazim | 8.00 |
| | 1,2-Benzisothiazolin-3-one | 0.03 |
| | Antifoaming agent | 0.05 |
| | Terbutryn | 5.50 |
| | Potassium disulphite | 2.11 |
| | Kathon 893 | 9.00 |
| | | |
| **2** | Purified water | 37.89 |
| | Container preservative | 0.06 |
| | Thickener | 0.55 |
| | Emulsifier | 1.50 |

Subdivision 1 was prepared by introducing water and adding the usual constituents with stirring. The mixture was subsequently stirred for approximately a further 30 min and was then milled in a bead mill to a maximum particle size of 10 µm. To prepare subdivision 2, water was introduced and potassium disulphite, container preservative and emulsifier were added thereto. The thickener was subsequently stirred in and the mixture was left stirring for approximately 1 hour. The subdivisions were then homogeneously mixed. The molar ratio of potassium disulphite to isothiazolone in preservative III according to the invention again amounts to approximately 1:1.

### Method C

The following constituents were used to prepare preservative IV according to the invention in a one-pot process (Table 3):

**Table 3**

| **Constituent** | **IV Parts** |
|---|---|
| Purified water | 30.0 |
| Nonionic surfactant | 1 |
| Antifoaming agent | 0.05 |
| Zinc oxide | 10 |
| Terbutryn | 6 |
| 1,2-Benzisothiazolin-3-one | 0.03 |
| | |
| Purified water | 6.42 |
| Emulsifier | 0.5 |
| Kathon 893 | 4.5 |
| Potassium disulphite | 1.05 |
| Thickener | 0.45 |
| Zinc pyrithione dispersion (48%) | 40.0 |

30 parts of water were introduced therein and the nonionic surfactant, the antifoaming agent, zinc oxide, terbutryn and 1,2-benzisothiazolin-3-one were added with stirring. After predispersing for 30 minutes with a toothed disc, the mixture was milled in a bead mill to a maximum particle size of 15 µm. 6.42 parts of water, the emulsifier, Kathon 893 and potassium disulphite were then added thereto and the mixture was stirred for a further 30 minutes, then the thickener and the zinc pyrithione dispersion were added and homogeneously stirred in. A homogeneous, white/light-beige dispersion is obtained. This preservative IV constitutes a fungicidal and algicidal carbendazim-free preservative which is effective against Alternaria species.

### Method D

### Preparation of preservative V (Comparison)

A preservative V, comparable with preservative IV according to the invention, was prepared comprising no potassium disulphite:

To prepare subdivision 1, 10 parts of purified water were introduced, 20 parts of zinc pyrithione dispersion (48%), 10 parts of zinc oxide, 5 parts of terbutryn and 0.03 part of 1,2-benzisothiazolin-3-one were then added with stirring and the mixture was subsequently stirred for 60 minutes with a propeller stirrer. Subdivision 1 was then milled in a bead mill to a maximum particle size of 15 µm.

To prepare subdivision 2, 39.31 parts of purified water were introduced, 0.06 part of container preservative and 0.5 part of thickener were added with stirring and the mixture was left to steep for 1 hour. 0.6 part of emulsifier, 4.5 parts of Kathon 893 and 10 parts of zinc pyrithione (48%) were then added and the mixture was homogeneously stirred. Subdivisions I and II were then homogeneously stirred together. A white/light-beige dispersion is obtained.

### 3. Storage stability of preservatives

Preservatives I, II and III were each stored at 4°C, 25°C and 40°C for a total of 1 year in polyethylene bottles. The results are shown in the following table (Table 4).

**Table 4**

| | | **I** | **II** | **III** |
|---|---|---|---|---|
| **Appearance of the dispersion** | | | | |
| 4°C | 3 months | homogeneous | homogeneous | homogeneous |
| | 6 months | nonhomogeneous | homogeneous | homogeneous |
| | 9 months | nonhomogeneous | homogeneous | homogeneous |
| | 12 months | nonhomogeneous | homogeneous | homogeneous |
| | | | | |
| 25°C | 3 months | homogeneous | homogeneous | homogeneous |
| | 6 months | homogeneous | homogeneous | homogeneous |
| | 9 months | homogeneous | homogeneous | homogeneous |
| | 12 months | nonhomogeneous | homogeneous | homogeneous |
| | | | | |
| 40°C | 3 months | homogeneous | homogeneous | homogeneous |
| | 6 months | homogeneous | homogeneous | homogeneous |
| | 12 months | nonhomogeneous | homogeneous | homogeneous |

### Result:

Preservative dispersion I not according to the invention is, on storage at 4°C, already nonhomogeneous after 6 months (needles in a pulpy, nonhomogeneous dispersion). On storage at 25°C or 40°C, these absences of homogeneity only appeared after approximately 1 year. In contrast, preservative dispersions II and III according to the invention, on storage at 4°C, 25°C or 40°C, are consistently homogeneous (particle size < 10 µm). This confirms the stabilization on storage according to the invention of dispersions comprising triazine and isothiazolone.

While the preservative IV according to the invention, on storage at 3°C, 25°C and 40°C, remains in each case a homogeneous, stable, white/light-beige dispersion, preservative dispersion V not according to the invention already shows, after storage for 4 months at 3°C, 25°C and 40°C, formation of crystals in each case.

### 4. Fungicidal and algistatic finishing of a pure acrylate exterior masonry paint

A preservative-free pure acrylate exterior masonry paint was used, the amounts of preservatives I and II given being incorporated (figures in weight%).
a) Algistatic finishing without being subjected to leaching

**Table 5**

| | Concentration used | Inhibitory zone in mm | Surface colonization | Delta E/Remarks | |
|---|---|---|---|---|---|
| Blank | | 0 | ++ | None | Reference |
| I | 2.0% | > 18 | - | 0.16 | None |
| | 1.0% | > 18 | - | 0.17 | None |
| | 0.5% | > 18 | - | 0.17 | None |
| II | 2.0% | > 18 | - | 0.13 | None |
| | 1.0% | > 18 | - | 0.16 | None |
| | 0.5% | > 18 | - | 0.16 | None |

b) Algistatic finishing with subjection to leaching for 72 hours

**Table 6**

| | Concentration used | Inhibitory zone in mm | Surface colonization | Delta E/Remarks | |
|---|---|---|---|---|---|
| Blank | | 0 | ++ | None | Reference |
| I | 2.0% | > 18 | - | 0.40 | Somewhat grey |
| | 1.0% | > 18 | - | 0.38 | None |
| | 0.5% | > 18 | - | 0.34 | None |
| II | 2.0% | > 18 | - | 0.39 | None |
| | 1.0% | > 18 | - | 0.37 | None |
| | 0.5% | > 18 | - | 0.37 | None |

c) Fungicidal finishing without being subjected to leaching

**Table 7**

| | Concentration used | Test microorganisms | | | | | |
|---|---|---|---|---|---|---|---|
| | | AN | | PF | | AL | |
| | | 1. | 2. | 1. | 2. | 1. | 2. |
| | | week | | week | | week | |
| Blank | | 5 | 5 | 5 | 5 | 5 | 5 |
| I | 2.0% | 0 | 0 | 00 | 0 | 0 | 1 |
| | 1.0% | 0 | 0 | 0 | 0 | (0) | 2 |
| | 0.5% | 0 | 0 | 0 | 0 | 1 | 2 |
| I | 2.0% | 0 | 0 | 0 | 0 | (0) | 1 |
| | 1.0% | 0 | 0 | 0 | 0 | 1 | 2 |
| | 0.5% | 0 | 0 | 0 | 0 | 2 | 3 |

d) Fungicidal finishing with subjection to leaching for 72 hours

**Table 8**

| | Concentration used | Test microorganisms | | | | | |
|---|---|---|---|---|---|---|---|
| | | AN | | PF | | AL | |
| | | 1. | 2. | 1. | 2. | 1. | 2. |
| | | week | | week | | week | |
| Blank | | 5 | 5 | 5 | 5 | 5 | 5 |
| I | 2.0% | (0) | (0) | 0 | 0 | 5 | 5 |
| | 1.0% | 1 | 1 | 0 | 0 | 5 | 5 |
| | 0.5% | 1 | 1 | (0) | (0) | 5 | 5 |
| I | 2.0% | (0) | (0) | 0 | 0 | 5 | 5 |
| | 1.0% | (0) | (0) | 0 | 0 | 5 | 5 |
| | 0.5% | 1 | 1 | (0) | (0) | 5 | 5 |

### Result:

It emerges, from the investigations on the fungicidal or algistatic finishing, that the microbiocidal action is not inhibited by addition of the stabilizer. In addition, when high concentrations are used, the slight grey coloration of the exterior masonry paint observed with preservative I not according to the invention does not appear with preservative II according to the invention.

## Claims

1. Preservative with algicidal and fungicidal action in the form of a dispersion which includes
a) at least one algicidal triazine,
b) at least one fungicidal isothiazolone and
c) at least one dispersion stabilizer chosen from the group consisting of
c1) sulphite salt, hydrogen sulphite salt, compound which releases sulphite and compound which releases hydrogen sulphite, and
c2) hypophosphite salt and compound which releases hypophosphite salt.

2. Preservative according to Claim 1, **characterized in that** it additionally includes d) at least one imidazole derivative, in particular methyl benzimidazol-2-ylcarbamate.

3. Preservative according to Claim 1 or Claim 2, **characterized in that** the triazine compound is chosen from N²,N⁴-diisopropyl-6-methylthio-1,3,5-triazine-2,4-diamine, N²-(tert-butyl)-N⁴⁻ethyl-6-methylthio-1,3,5-triazine-2,4-diamine and N²-(tert-butyl)-N⁴-cyclopropyl-6-methylthio-1,3,5-triazine-2,4-diamine.

4. Preservative according to one of the preceding claims, **characterized in that** the isothiazolone is an isothiazolin-3-one and is chosen from N-octylisothiazolone, N-methylisothiazoline, 5-chloro-N-methylisothiazolone, 4,5-dichloro-N-octylisothiazolone, benzisothiazolone and N-butylbenzisothiazolone.

5. Preservative according to one of the preceding claims, **characterized in that** the dispersion stabilizer is chosen from sulphur dioxide, aqueous sulphur dioxide solution, alkali metal sulphites, ammonium sulphite, bis(bis(2-hydroxyethyl)ammonium) sulphite, bis(triethylammonium) sulphite, bis((2-hydroxyethyl)ammonium) sulphite, alkaline earth metal sulphites, glyoxal bis(sodium hydrogen sulphite) adduct, glutaraldehyde bis(sodium hydrogen sulphite) adduct, lignosulphonic acids and sulphite waste liquors.

6. Preservative according to Claim 5, **characterized in that** the dispersion stabilizer is an alkali metal sulphite salt, in particular potassium disulphite.

7. Preservative according to one of Claims 1 to 4, **characterized in that** the dispersion stabilizer is chosen from alkali metal hypophosphites, ammonium hypophosphite, alkaline earth metal hypophosphites, zinc hypophosphite and thiabendazole hypophosphite.

8. Preservative according to one of the preceding claims, **characterized in that** the molar ratio of b) isothiazolone to c) stabilizer is 1:10 to 10:1, preferably 1:2 to 2:1, particularly 1:1.5 to 1.5:1, such as 1:1.1 to 1.1:1.

9. Preservative according to one of the preceding claims, **characterized in that** the total content of a), b), c) and optionally d) is 1 to 99 weight%, preferably 5 to 60 weight%, in particular 10 to 30 weight%.

10. Preservative according to one of the preceding claims, **characterized in that** it includes a) 1 to 12 weight%, preferably 3 to 9 weight%, more preferably 4 to 7 weight%, of triazine.

11. Preservative according to one of the preceding claims, **characterized in that** it includes b) 1 to 8 weight%, preferably 2 to 6 weight%, more preferably 3 to 5 weight%, of isothiazolone.

12. Preservative according to one of the preceding claims, **characterized in that** it includes c) 0.5 to 5 weight%, preferably 1 to 3 weight%, more preferably 1.5 to 2.5 weight%, of dispersion stabilizer.

13. Preservative according to one of the preceding claims, **characterized in that** it includes d) 2 to 13 weight%, preferably 4 to 11 weight%, in particular 6 to 9 weight%, of imidazole derivative.

14. Preservative according to one of the preceding claims, **characterized in that** it comprises less than 10 weight% of solvent, preferably less than 7 weight% and in particular less than 5 weight%.

15. Preservative according to one of the preceding claims, **characterized in that** it additionally comprises one or more functional additives.

16. Preservative according to Claim 15, **characterized in that** the additive is chosen from nonionic surfactants, antifoaming agents, zinc oxide, container preservatives, thickeners, starch, zinc pyrithione, benzalkonium salts, didecyldimethylammonium choride (Bardac-22) salts, biguanide (Vantocil IB) salts, thiabendazole, dodecylguanidinium acetate, iodopropynyl butylcarbamate, diuron, benzothiophene-2-cyclohexylcarboxamide and emulsifiers.

17. Preservative according to Claim 16, **characterized in that** it comprises, as additive, 0 to 2 weight% of nonionic surfactant, 0 to 0.2 weight% of antifoaming agent, 0 to 20 weight% of zinc oxide, 0 to 0.2 weight% of container preservative and/or 0 to 1 weight% of thickener.

18. Preservative according to one of the preceding claims, **characterized in that** it essentially comprises
a) 5.6 weight% of N²-(tert-butyl)-N⁴-ethyl-6-methylthio-1,3,5-triazine-2,4-diamine,
b) 4 weight% of N-octylisothiazolone,
c) 2 weight% of potassium disulphite and
d) 7.8 weight% of carbendazim,
and water as the remainder.

19. Preservative according to one of the preceding claims, **characterized in that** it includes no carbendazim and essentially comprises
a) 6 weight% of N²-(tert-butyl)-N⁴-ethyl-6-methylthio-1,3,5-triazine-2,4-diamine,
b) 2 weight% of N-octylisothiazolone,
c) 1 weight% of potassium disulphite,
d) 10 weight% of zinc oxide,
e) 19 weight% of zinc pyrithione and
f) 1 weight% of nonionic surfactant,
and water as the remainder.

20. Use of a preservative according to one of the preceding claims in an aqueous dispersion for use in or on technical products for internal or external application.

21. Use according to Claim 20, **characterized in that** the technical product is chosen from finishes, paints, plaster, varnishes, fillers, sealants, plastics, composites, wood, concrete, stone, paper, board, leather, textiles, glues and adhesives.

22. Use according to Claim 20 or Claim 21, **characterized in that** the technical product
exists at a pH of 1 to 13, preferably 3 to 12, or
exists at a pH of 11 or higher, preferably higher than 12, in particular higher than 13.

23. Use according to one of Claims 20 to 22, **characterized in that** 0.1 to 5 weight% of the preservative is used, preferably 0.5 to 3 weight%, in particular 1 to 2 weight%, with reference to the technical product.

24. Use of
i) sulphite salt, hydrogen sulphite salt, compound which releases sulphite or compound which releases hydrogen sulphite, or
ii) hypophosphite salt or compound which releases hypophosphite,
for the stabilizing of a composition which includes
a) at least one algicidal triazine and
b) at least one fungicidal isothiazolone.

## Patentansprüche

1. Konservierungsmittel mit algizider und fungizider Wirkung in Form einer Dispersion, das
a) mindestens ein algizides Triazin,
b) mindestens ein fungizides Isothiazolon und
c) mindestens einen Dispersionsstabilisator umfasst, der ausgewählt ist aus der Gruppe bestehend aus
c1) Sulfitsalz, Hydrogensulfitsalz, Sulfitfreisetzender und Hydrogensulfit-freisetzender Verbindung und
c2) Hypophosphitsalz und Hypophosphitsalzfreisetzender Verbindung.

2. Konservierungsmittel nach Anspruch 1, **dadurch gekennzeichnet, dass** es ferner d) mindestens ein Imidazolderivat umfasst, insbesondere Methylbenzimidazol-2-ylcarbamat.

3. Konservierungsmittel nach Anspruch 1 oder Anspruch 2, **dadurch gekennzeichnet, dass** die Triazinverbindung ausgewählt ist aus N²,N⁴-Diisopropyl-6-methylthio-1,3,5-triazin-2,4-diamin, N²-tert.-Butyl-N⁴-ethyl-6-methylthio-1,3,5-triazin-2,4-diamin und N²-tert.-Butyl-N⁴-cyclopropyl-6-methylthio-1,3,5-triazin-2,4-diamin.

4. Konservierungsmittel nach einem der vorhergehenden Ansprüche, **dadurch gekennzeichnet, dass** das Isothiazolon ein Isothiazolin-3-on ist und ausgewählt ist aus N-Octylisothiazolon, N-Methylisothiazolin, 5-Chlor-N-methylisothiazolon, 4,5-Di-chlor-N-octylisothiazolon, Benzisothiazolon und N-Butyl-benzisothiazolon.

5. Konservierungsmittel nach einem der vorhergehenden Ansprüche, **dadurch gekennzeichnet, dass** der Dispersionsstabilisator ausgewählt ist aus Schwefeldioxid, wässriger Schwefeldioxidlösung, Alkalimetallsulfiten, Ammoniumsulfit, Bis(bis(2-hydroxyethyl)ammonium)sulfit, Bis(triethylammonium)-sulfit, Bis((2-hydroxyethyl)ammonium)sulfit, Erdalkalimetallsulfiten, Glyoxal-bis-Natriumhydrogensulfit-Addukt, Glutardialdehyd-bis-Natrium-hydrogensulfit-Addukt, Ligninsulfonsäuren und Sulfitablaugen.

6. Konservierungsmittel nach Anspruch 5, **dadurch gekennzeichnet, dass** der Dispersionsstabilisator ein Alkalimetallsulfitsalz ist, insbesondere Kaliumdisulfit.

7. Konservierungsmittel nach einem der Ansprüche 1 bis 4, **dadurch gekennzeichnet, dass** der Dispersionsstabilisator ausgewählt ist aus Alkalimetallhypophosphiten, Ammoniumhypophosphit, Erdalkalimetallhypophosphiten, Zinkhypophosphit und Thiabendazolhypophosphit.

8. Konservierungsmittel nach einem der vorhergehenden Ansprüche, **dadurch gekennzeichnet, dass** das molare Verhältnis von b) Isothiazolon zu c) Stabilisator 1:10 bis 10:1 beträgt, bevorzugt 1:2 bis 2:1, insbesondere 1:1,5 bis 1,5:1, wie 1:1,1 bis 1,1:1.

9. Konservierungsmittel nach einem der vorhergehenden Ansprüche, **dadurch gekennzeichnet, dass** der Gesamtanteil a), b), c) und gegebenenfalls d) 1 bis 99 Gew.-% beträgt, vorzugsweise 5 bis 60 Gew.-%, insbesondere 10 bis 30 Gew.-%.

10. Konservierungsmittel nach einem der vorhergehenden Ansprüche, **dadurch gekennzeichnet, dass** es a) 1 bis 12 Gew.-%, vorzugsweise 3 bis 9 Gew.-%, bevorzugter 4 bis 7 Gew.-%, Triazin umfasst.

11. Konservierungsmittel nach einem der vorhergehenden Ansprüche, **dadurch gekennzeichnet, dass** es b) 1 bis 8 Gew.-%, vorzugsweise 2 bis 6 Gew.-%, bevorzugter 3 bis 5 Gew.-%, Isothiazolon umfasst.

12. Konservierungsmittel nach einem der vorhergehenden Ansprüche, **dadurch gekennzeichnet, dass** es c) 0,5 bis 5 Gew.-%, vorzugsweise 1 bis 3 Gew.-%, bevorzugter 1,5 bis 2,5 Gew.-%, Dispersionsstabilisator umfasst.

13. Konservierungsmittel nach einem der vorhergehenden Ansprüche, **dadurch gekennzeichnet, dass** es d) 2 bis 13 Gew.-%, vorzugsweise 4 bis 11 Gew.-%, insbesondere 6 bis 9 Gew.-%, Imidazolderivat umfasst.

14. Konservierungsmittel nach einem der vorhergehenden Ansprüche, **dadurch gekennzeichnet, dass** es weniger als 10 Gew.-% Lösungsmittel enthält, vorzugsweise weniger als 7 Gew.-% und insbesondere weniger als 5 Gew.-%.

15. Konservierungsmittel nach einem der vorhergehenden Ansprüche, **dadurch gekennzeichnet, dass** es ferner einen oder mehrere funktionelle Zusatzstoffe enthält.

16. Konservierungsmittel nach Anspruch 15, **dadurch gekennzeichnet, dass** der Zusatzstoff ausgewählt ist aus nichtionischen Tensiden, Entschäumern, Zinkoxid, Gebindekonservierungsmitteln, Verdickern, Stärke, Zinkpyrithion, Benzalkoniumsalzen, Didecyldimethylammoniumchlorid (Bardac-22)-Salzen, Biguanid (Vantocil IB)-Salzen, Thiabendazol, Dodecylguanidiniumacetat, Iodpropinylbutylcarbamat, Diuron, Benzothiophen-2-cyclohexylcarboxamid und Emulgatoren.

17. Konservierungsmittel nach Anspruch 16, **dadurch gekennzeichnet, dass** es als Zusatzstoff 0 bis 2 Gew.-% nichtionisches Tensid, 0 bis 0,2 Gew.-% Entschäumer, 0 bis 20 Gew.-% Zinkoxid, 0 bis 0,2 Gew.-% Gebindekonservierungsmittel und/oder 0 bis 1 Gew.-% Verdicker enthält.

18. Konservierungsmittel nach einem der vorhergehenden Ansprüche, **dadurch gekennzeichnet, dass** es im Wesentlichen aus
a) 5,6 Gew.-% N²-tert.-Butyl-N⁴-ethyl-6-methylthio-1,3,5-triazin-2,4-diamin,
b) 4 Gew.-% N-Octylisothiazolon,
c) 2 Gew.-% Kaliumdisulfit und
d) 7,8 Gew.-% Carbendazim
und als Rest Wasser besteht.

19. Konservierungsmittel nach einem der vorhergehenden Ansprüche, **dadurch gekennzeichnet, dass** es kein Carbendazim enthält und im Wesentlichen aus
a) 6 Gew.-% N²-tert.-Butyl-N⁴-ethyl-6-methylthio-1,3,5-triazin-2,4-diamin,
b) 2 Gew.-% N-Octylisothiazolon,
c) 1 Gew.-% Kaliumdisulfit,
d) 10 Gew.-% Zinkoxid,
e) 19 Gew.-% Zinkpyrithion, und
f) 1 Gew.-% nichtionischem Tensid
und als Rest Wasser besteht.

20. Verwendung eines Konservierungsmittels gemäß einem der vorhergehenden Ansprüche in einer wäßrigen Dispersion zum Einsatz in oder auf technischen Produkten für den Innen- oder Außenbereich.

21. Verwendung nach Anspruch 20, **dadurch gekennzeichnet, dass** das technische Produkt ausgewählt ist aus Anstrichen, Farben, Putzen, Lacken, Spachtel- und Dichtungsmassen, Kunststoffen, Verbundmaterialien, Holz, Beton, Stein, Papier, Pappe, Leder, Textilien, Leimen und Klebstoffen.

22. Verwendung nach Anspruch 20 oder Anspruch 21, **dadurch gekennzeichnet, dass** das technische Produkt
bei einem pH-Wert von 1 bis 13 vorliegt, vorzugsweise 3 bis 12, oder
bei einem pH-Wert von 11 oder höher vorliegt, vorzugsweise höher als 12, insbesondere höher als 13.

23. Verwendung nach einem der Ansprüche 20 bis 22, **dadurch gekennzeichnet, dass** 0,1 bis 5 Gew.-% des Konservierungsmittels eingesetzt werden, vorzugsweise 0,5 bis 3 Gew.-%, insbesondere 1 bis 2 Gew.-%, bezogen auf das technische Produkt.

24. Verwendung von
i) Sulfitsalz, Hydrogensulfitsalz, Sulfitfreisetzender Verbindung oder Hydrogensulfitfreisetzender Verbindung oder
ii) Hypophosphitsalz oder Hypophosphitfreisetzender Verbindung
zur Stabilisierung einer Zusammensetzung, die
a) mindestens ein algizides Triazin und
b) mindestens ein fungizides Isothiazolon umfasst.

## Revendications

1. Agent conservateur à action algicide et fongicide sous forme d'une dispersion qui comprend
a) au moins une triazine algicide,
b) au moins une isothiazolone fongicide et
c) au moins un stabilisateur de dispersion choisi dans le groupe consistant en
c1) un sel de sulfite, un sel d'hydrogénosulfite, un composé qui libère un sulfite et un composé qui libère un hydrogénosulfite, et
c2) un sel d'hypophosphite et un composé qui libère un sel d'hypophosphite.

2. Agent conservateur selon la revendication 1, **caractérisé en ce qu'**il comprend en plus d) au moins un dérivé imidazol, en particulier le benzimidazol-2-ylcarbamate de méthyle.

3. Agent conservateur selon la revendication 1 ou la revendication 2, **caractérisé en ce que** le composé de type triazine est choisi parmi la N²,N⁴⁻diisopropyl-6-méthylthio-1,3,5-triazine-2,4-diamine, la N²-(tert-butyl)-N⁴-éthyl-6-méthylthio-1,3,5-triazine-2,4-diamine et la N²-(tert-butyl)-N⁴-cyclopropyl-6-méthylthio-1,3,5-triazine-2,4-diamine.

4. Agent conservateur selon l'une quelconque des revendications précédentes, **caractérisé en ce que** l'isothiazolone est une isothiazolin-3-one et est choisie parmi la N-octylisothiazolone, la N-méthylisothiazoline, la 5-chloro-N-méthylisothiazolone, la 4,5-dichloro-N-octylisothiazolone, la benzisothiazolone et la N-butylbenzisothiazolone.

5. Agent conservateur selon l'une quelconque des revendications précédentes, **caractérisé en ce que** le stabilisateur de dispersion est choisi parmi le dioxyde de soufre, une solution aqueuse de dioxyde de soufre, les sulfites de métaux alcalins, le sulfite d'ammonium, le sulfite de bis(bis(2-hydroxyéthyl)ammonium), le sulfite de bis(triéthylammonium), le sulfite de bis((2-hydroxyéthyl)ammonium), les sulfites de métaux alcalinoterreux, le produit d'addition du glyoxal sur le bis(hydrogénosulfite de sodium), le produit d'addition du glutaraldéhyde sur le bis(hydrogénosulfite de sodium), les acides lignosulfoniques et les liqueurs résiduaires à base de sulfite.

6. Agent conservateur selon la revendication 5, **caractérisé en ce que** le stabilisateur de dispersion est un sel de sulfite de métal alcalin, en particulier le disulphite de potassium.

7. Agent conservateur selon l'une quelconque des revendications 1 à 4, **caractérisé en ce que** le stabilisateur de dispersion est choisi parmi les hypophosphites de métaux alcalins, l'hypophosphite d'ammonium, les hypophosphites de métaux alcalinoterreux, l'hypophosphite de zinc et l'hypophosphite de thiabendazole.

8. Agent conservateur selon l'une quelconque des revendications précédentes, **caractérisé en ce que** le rapport molaire de b) l'isothiazolone et de c) le stabilisateur est de 1:10 à 10:1, de préférence de 1:2 à 2:1, en particulier de 1:1,5 à 1,5:1, tel que 1:1,1 à 1,1:1.

9. Agent conservateur selon l'une quelconque des revendications précédentes, **caractérisé en ce que** la teneur totale de a), b), c) et éventuellement d) est de 1 à 99 % en poids, de préférence de 5 à 60 % en poids, en particulier de 10 à 30 % en poids.

10. Agent conservateur selon l'une quelconque des revendications précédentes, **caractérisé en ce qu'**il comprend a) 1 à 12 % en poids, de préférence 3 à 9 % en poids, plus préférablement 4 à 7 % en poids, de triazine.

11. Agent conservateur selon l'une quelconque des revendications précédentes, **caractérisé en ce qu'**il comprend b) 1 à 8 % en poids, de préférence 2 à 6 % en poids, plus préférablement 3 à 5 % en poids, d'isothiazolone.

12. Agent conservateur selon l'une quelconque des revendications précédentes, **caractérisé en ce qu'**il comprend c) 0,5 à 5 % en poids, de préférence 1 à 3 % en poids, plus préférablement 1,5 à 2,5 % en poids, de stabilisateur de dispersion.

13. Agent conservateur selon l'une quelconque des revendications précédentes, **caractérisé en ce qu'**il comprend d) 2 à 13 % en poids, de préférence 4 à 11 % en poids, en particulier 6 à 9 % en poids, de dérivé imidazol.

14. Agent conservateur selon l'une quelconque des revendications précédentes, **caractérisé en ce qu'**il comprend moins de 10 % en poids de solvant, de préférence moins de 7 % en poids et en particulier moins de 5 % en poids.

15. Agent conservateur selon l'une quelconque des revendications précédentes, **caractérisé en ce qu'**il comprend en plus un ou plusieurs additifs fonctionnels.

16. Agent conservateur selon la revendication 15, **caractérisé en ce que** l'additif est choisi parmi les tensioactifs non ioniques, les agents antimousse, l'oxyde de zinc, les agents conservateurs de récipient, les épaississants, l'amidon, la pyrithione de zinc, les sels de benzalconium, les sels de chlorure de didécyldiméthylammonium (Bardac-22), les sels de biguanide (Vantocil IB), le thiabendazole, l'acétate de dodécylguanidinium, le butylcarbamate d'iodopropynyle, le diuron, la benzothiophène-2-cyclohexylcarboxamide et les émulsifiants.

17. Agent conservateur selon la revendication 16, **caractérisé en ce qu'**il comprend, en tant qu'additif, 0 à 2 % en poids de tensioactif non ionique, 0 à 0,2 % en poids d'agent antimousse, 0 à 20 % en poids d'oxyde de zinc, 0 à 0,2 % en poids d'agent conservateur de récipient et/ou 0 à 1 % en poids d'épaississant.

18. Agent conservateur selon l'une quelconque des revendications précédentes, **caractérisé en ce qu'**il comprend essentiellement
a) 5,6 % en poids de N²-(tert-butyl)-N⁴-éthyl-6-méthylthio-1,3,5-triazine-2,4-diamine,
b) 4 % en poids de N-octylisothiazolone,
c) 2 % en poids de disulphite de potassium et
d) 7,8 % en poids de carbendazime,
et le complément en eau.

19. Agent conservateur selon l'une quelconque des revendications précédentes, **caractérisé en ce qu'**il ne comprend pas de carbendazime et comprend essentiellement
a) 6 % en poids de N²-(tert-butyl)-N⁴-éthyl-6-méthyl-thio-1,3,5-triazine-2,4-diamine,
b) 2 % en poids de N-octylisothiazolone,
c) 1 % en poids de disulphite de potassium,
d) 10 % en poids d'oxyde de zinc,
e) 19 % en poids de pyrithione de zinc et
f) 1 % en poids de tensioactif non ionique,
et le complément en eau.

20. Utilisation d'un agent conservateur selon l'une quelconque des revendications précédentes dans une dispersion aqueuse destinée à être utilisée dans ou sur des produits techniques pour une application en intérieur ou en extérieur.

21. Utilisation selon la revendication 20, **caractérisée en ce que** le produit technique est choisi parmi les finitions, les peintures, le plâtre, les vernis, les agents de remplissage, les mastics, les plastiques, les composites, le bois, le béton, la pierre, le papier, le carton, le cuir, les textiles, les colles et les adhésifs.

22. Utilisation selon la revendication 20 ou la revendication 21, **caractérisée en ce que** le produit technique
existe à un pH de 1 à 13, de préférence de 3 à 12, ou
existe à un pH de 11 ou supérieur, de préférence supérieur à 12, en particulier supérieur à 13.

23. Utilisation selon l'une quelconque des revendications 20 à 22, **caractérisée en ce que** 0,1 à 5 % en poids de l'agent conservateur est utilisé, de préférence 0,5 à 3 % en poids, en particulier 1 à 2 % en poids, en référence au produit technique.

24. Utilisation de
i) un sel de sulfite, un sel d'hydrogénosulfite, un composé qui libère un sulfite ou un composé qui libère un hydrogénosulfite, ou
ii)un sel d'hypophosphite ou un composé qui libère un hypophosphite,
pour la stabilisation d'une composition qui comprend
a) au moins une triazine algicide et
b) au moins une isothiazolone fongicide.
